# EUROPÄISCHE PATENTSCHRIFT

(11) **EP 0 649 859 B1**
(45) Veröffentlichungstag und Bekanntmachung des Hinweises auf die Patenterteilung: **30.07.1997**
(21) Anmeldenummer: 94114682.1
(22) Anmeldetag: 17.09.1994
(51) Int. Cl.: C08F 8/30, C08F 255/02

(54) **Mit Monomaleimiden gepfropfte Propylencopolymerisate**
Propylene copolymers grafted with monomaleimides
Copolymères de propylène greffés avec monomaléimides

(30) Priorität: 25.09.1993 DE 4332734; 02.10.1993 DE 4333670
(43) Veröffentlichungstag der Anmeldung: 26.04.1995
(73) Patentinhaber: BASF Aktiengesellschaft, 67063 Ludwigshafen (DE)
(72) Erfinder: Marczinke, Bernd Lothar, Dr., D-67346 Speyer (DE); Müller, Hans-Joachim, Dr., D-67269 Grünstadt (DE)

(56) Entgegenhaltungen:
- EP-A- 0 363 870
- DE-A- 1 920 692
- DE-A- 4 022 570
- DATABASE WPI Derwent Publications Ltd., London, GB; AN 87-337827 & JP-A-62 241 913 (MITSUI PETROCHEM IND KK) 22. Oktober 1987

## Beschreibung

Die vorliegende Erfindung betrifft mit Monomaleimiden gepfropfte Propylencopolymerisate mit einem Schmelzflußindex von 0,1 bis 100 g/10 min., bei 230°C und unter einem Gewicht von 2,16 kg, aus
a₁) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist oder aus
a₂) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt und
b) einer Monomaleimidverbindung der folgenden Formel (I) 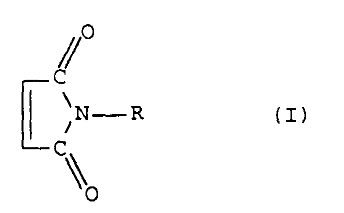 in der R die folgende Bedeutung hat:
   C₁-C₁₀-Alkyl, wobei der Alkylrest mit einem oder mehreren Sauerstoffatomen unterbrochen sein kann, C₅-C₁₀-Cycloalkyl, C₆-C₁₂-Aryl, C₇₋C₁₈-Aralkyl, sowie einen Rest der folgenden Formel (II)

   R¹-X (II)

   wobei R¹ für einen C₁-C₁₀-Alkylrest und X für eine der folgenden funktionellen Gruppen steht:
   -COOH, -COOR², OH, OR³, NH₂, NHR⁴, NR⁵R⁶,
   und wobei die Reste R², R³, R⁴, R⁵ und R⁶ jeweils eine C₁-C₁₀-Alkylgruppe bedeuten,
   erhältlich durch Umsetzung des Polymerisats a₁) oder a₂) mit der Monomaleimidverbindung b) bei Temperaturen von 180 bis 280°C, Drucken von 1 bis 100 bar und mittleren Verweilzeiten des Reaktionsgemisches von 0,2 bis 10 Minuten.

Außerdem betrifft die vorliegende Erfindung ein Verfahren zur Herstellung dieser gepfropften Propylenpolymerisate sowie Folien, Fasern und Formkörper aus diesen gepfropften Propylenpolymerisaten.

Die Pfropfung von Propylenpolymerisaten mit Hilfe von ungesättigten Carbonsäurederivaten, beispielsweise Maleinsäurederivaten, ist bereits seit einiger Zeit bekannt (DE-A 3 901 606). Derartige Pfropfreaktionen können in Anwesenheit radikalisch zerfallender Initiatoren durchgeführt werden, wobei es aber häufig zu einem starken Molmassenabbau bei den erhaltenen gepfropften Propylenpolymerisaten kommt, der die mechanischen Eigenschaften dieser Polymerisate verschlechtert (J. Appl. Poly. Sci., Vol 32, 5431-5437 [1986]. Weiterhin ist es bei derartigen Herstellungsverfahren für gepfropfte Propylenpolyrnerisate von Nachteil, daß die Pfropfreaktion mit Hilfe von radikalisch zerfallenden Initiatoren wie beispielsweise organischen Peroxiden oder Azoverbindungen durchgeführt werden muß, da diese Verbindungen häufig explosiv sind und aus arbeitshygienischen Gründen nicht bedenkenlos eingesetzt werden können.

In der DE-A 4 022 570 wird die Pfropfung von Propylencopolymerisaten mit Hilfe von ungesättigten Carbonsäuren bzw. säurederivaten beschrieben, wobei die Pfropfreaktion in Abwesenheit von radikalisch zerfallenden Initiatoren durchgeführt werden kann. Besonders geeignete Carbonsäuren sind dabei vor allem Maleinsäure, Fumarsäure, Acrylsäure, Crotonsäure, Itaconsäure oder deren Anhydride.

Nachteilig an dem in der DE-A 4 022 570 beschriebenen Verfahren ist jedoch, daß nur bei relativ kleinen Konzentrationen der ungesättigten Carbonsäuren bzw. ihrer Derivate hohe Pfropfausbeuten von mehr als 80 % erreicht werden können. Dadurch wird die Wirtschaftlichkeit des Pfropfverfahrens reduziert. Weiterhin sind die dabei eingesetzten Pfropfcomonomere häufig flüchtig. Aus diesem Grund kann es bei der Weiterverarbeitung der gepfropften Propylencopolymerisate aufgrund unumgesetzter Pfropfcomonomerer unter Umständen zu Schwierigkeiten hinsichtlich der Einhaltung von toxikologischen Sicherheitsbestimmungen kommen.

Aufgabe der vorliegenden Erfindung war es daher, den geschilderten Nachteilen abzuhelfen, und neue gepfropfte Polymerisate zu entwickeln, die weniger flüchtige Comonomere enthalten und nach einem Verfahren erhalten werden können, bei welchem es möglich ist, auch größere Konzentrationen der zu pfropfenden Comonomeren mit hohen Pfropfausbeuten in die Polymerisate einzubauen.

Demgemäß wurde die eingangs definierten, mit Monomaleimiden gepfropften Propylencopolymerisate gefunden.

Die erfindungsgemäßen gepfropften Propylencopolymerisate weisen einen Schmelzflußindex von 0,1 bis 100 g/10 min., bei 230°C und unter einem Gewicht von 2,16 kg, auf. Der Schmelzflußindex entspricht dabei der Menge an Polymerisat, die innerhalb von 10 Minuten aus der nach DIN 53 735 genormten Prüfvorrichtung bei einer Temperatur von 230°C und unter einem Gewicht von 2,16 kg ausgepreßt wird. Besonders bevorzugt sind dabei solche gepfropften Propylencopolymerisate, deren Schmelzflußindex 0,1 bis 50 g/10 min, bei 230°C und unter einem Gewicht von 2,16 kg, beträgt.

Die erfindungsgemäßen gepfropften Propylencopolymerisate können zum einen ein Polymerisat a₁) enthalten, welches aus einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II) besteht, wobei letzeres 15 bis 80 Gew.-% einpolymerisierte C₂-C₁₀-Alk-1-ene aufweist. Bevorzugt sind dabei gepfropfte Propylencopolymerisate, deren Polymerisat a₁) 35 bis 95 Gew.-% eines Propylencopolymerisats (I) mit 0,2 bis 12 Gew.-% einpolymerisierter C₂-C₁₀-Alk-1-ene und 5 bis 65 Gew.-% eines Propylencopolymerisats (II) mit 20 bis 75 Gew.-% einpolymerisierter C₂-C₁₀-Alk-1-ene enthält. Unter diesen gepfropften Propylencopolymerisaten werden solche besonders bevorzugt eingesetzt, deren Polymerisat a₁) aus 40 bis 93 Gew.-% eines Propylencopolymerisats (I) mit 0,3 bis 9 Gew.-% einpolymerisierter C₂-C₁₀-Alk-1-ene und aus 7 bis 60 % Gew.-% eines Propylencopolymerisats (II) mit 25 bis 70 Gew.-% einpolymerisierter C₂-C₁₀-Alk-1-ene besteht.

Unter einpolymerisierten C₂-C₁₀-Alk-1-enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a₁) kann in den üblichen, für die Polymerisation von Propylen verwendeten Reaktoren entweder absatzweise oder bevorzugt kontinuierlich durchgeführt werden. Geeignete Reaktoren sind u.a. kontinuierlich betriebene Rührkessel, wobei man auch eine Reihe von mehreren hintereinander geschalteten Rührkesseln einsetzen kann. Die Reaktoren enthalten ein Festbett aus feinteiligem Polymerisat, welches üblicherweise durch Rühren in Bewegung gehalten wird.

Das Verfahren kann mit den in der Polymerisationstechnik üblichen Ziegler-Natta-Katalysatoren sowohl in der Gasphase, als auch in einer Aufschlämmung oder in einer Lösung durchgeführt werden. Diese enthalten u.a. neben einer titanhaltigen Feststoffkomponente noch Cokatalysatoren. Als Cokatalysatoren kommen dabei Aluminiumverbindungen zusammen mit Elektronendonorverbindungen in Frage.

Zur Herstellung der titanhaltigen Feststoffkomponente werden als Titanverbindungen im allgemeinen Halogenide oder Alkoholate des drei- oder vierwertigen Titans verwendet, wobei die Chloride des Titans, insbesondere Titantetrachlorid, bevorzugt sind. Vorteilhaft enthält die titanhaltige Feststoffkomponente einen feinteiligen Träger, wofür sich Silicium- und Aluminiumoxide, sowie Aluminiumsilicate der Bruttoformel SiO₂ · aAl₂O₃, wobei a für einen Wert von 0,001 bis 2, insbesondere von 0,01 bis 0,5 steht, gut bewährt haben.

Die bevorzugt verwendeten Träger weisen einen Teilchendurchmesser von 0,1 bis 1000 µm, insbesondere von 10 bis 300 µm, ein Porenvolumen von 0,1 bis 10 cm³/g, insbesondere von 1,0 bis 5,0 cm³/g und eine spezifische Oberfläche von 10 bis 1000 m²/g, insbesondere von 100 bis 500 m²/g auf.

Weiter werden bei der Herstellung der titanhaltigen Feststoffkomponente u.a. Verbindungen des Magnesiums eingesetzt. Als solche kommen insbesondere Magnesiumhalogenide, Magnesiumalkyle und Magnesiumaryle, sowie Magnesiumalkoxy- und Magnesiumaryloxyverin Betracht, wobei bevorzugt Magnesiumdichlorid, Magnesiumdibromid und Magnesiumdi- (C₁-C₁₀-alkyl)-Verbindungen verwendet werden. Daneben kann die titanhaltige Feststoffkomponente noch Halogen, bevorzugt Chlor oder Brom, enthalten.

Außerdem enthält die titanhaltige Feststoffkomponente in der Regel noch Elektronendonorverbindungen, beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Bevorzugt werden als Elektronendonorverbindungen innerhalb der titanhaltigen Feststoffkomponente Phthalsäurederivate der allgemeinen Formel (III) 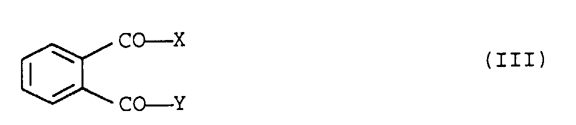 verwendet, wobei X und Y jeweils für Chlor oder einen C₁- bis C₁₀-Alkoxyrest oder gemeinsam für Sauerstoff stehen. Besonders bevorzugte Elektronendonorverbindungen sind Phthalsäureester, wobei X und Y C₁-C₈-Alkoxyreste, beispielsweise Methoxy-, Ethoxy-, Propyloxy- oder Butyloxyreste bedeuten.

Weiter bevorzugte Elektronendonorverbindungen innerhalb der titanhaltigen Feststoffkomponente sind u.a. Diester von 3- oder 4-gliedrigen, gegebenenfalls substituierten Cycloalkyl-1,2-dicarbonsäuren, sowie Monoester von, gegebenenfalls substituierten Benzophenon-2-carbonsäuren. Als Hydroxyverbindungen werden bei diesen Estern die bei Veresterungsreaktionen üblichen Alkohole verwendet, u.a. C₁- bis C₁₅-Alkanole, C₅- bis C₇-Cycloalkanole, die ihrerseits C₁- bis C₁₀-Alkylgruppen tragen können, ferner Phenole, Naphthole sowie die C₁-C₁₀-Alkylderivate dieser Verbindungen.

Die titanhaltige Feststoffkomponente kann nach an sich bekannten Methoden hergestellt werden. Beispiele dafür sind u.a. in der EP-A 45 975, der EP-A 86 473, der EP-A 171 200, der GB-A 2 111 066 und der US-A 4 857 613 beschrieben.

Bei der Herstellung der titanhaltigen Feststoffkomponente wird bevorzugt das nachstehende dreistufige Verfahren angewandt.

In der ersten Stufe versetzt man zunächst einen feinteiligen Träger, bevorzugt Siliciumdioxid oder SiO₂ · aAl₂O₃ mit einem Wassergehalt von 0,5 bis 5 Gew.-% - wobei a für eine Zahl im Bereich von 0,001 bis 2, insbesondere im Bereich von 0,01 bis 0,5 steht - mit einer Lösung der maghesiumhaltigen Verbindung in einem flüssigen Alkan, wonach man dieses Gemisch 0,5 bis 5 Stunden lang bei einer Temperatur zwischen 10 und 120°C rührt.

Vorzugsweise setzt man pro Mol des Trägers 0,1 bis 1 mol der Magnesiumverbindung ein. Anschließend fügt man unter ständigem Rühren ein Halogen oder einen Halogenwasserstoff, insbesondere Chlor oder Chlorwasserstoff im wenigstens zweifachen, bevorzugt im wenigstens fünffachen molaren Überschuß, bezogen auf die magnesiumhaltige Verbindung, hinzu. Nach etwa 30 bis 120 Minuten trennt man den Feststoff von der flüssigen Phase ab.

In der zweiten Stufe bringt man das auf diese Weise erhaltene Produkt in ein flüssiges Alkan ein und fügt danach ein C₁- bis C₈-Alkanol, insbesondere Ethanol, ein Halogenid oder ein Alkoholat des drei- oder vierwertigen Titans, insbesondere Titantetrachlorid, sowie eine Elektronendonorverbindung, insbesondere ein Phthalsäurederivat der allgemeinen Formel (III) hinzu. Dabei setzt man pro Mol Magnesium des aus der ersten Stufe erhaltenen Feststoffs 1 bis 5 mol, insbesondere 2 bis 4 mol, Alkanol, 2 bis 20 mol, insbesondere 4 bis 10 mol, des drei- oder vierwertigen Titans und 0,01 bis 1 mol, insbesondere 0,1 bis 1,0 mol, der Elektronendonorverbindung ein. Dieses Gemisch wird wenigstens eine Stunde lang bei einer Temperatur zwischen 10 und 150°C gerührt, der so erhaltene feste Stoff anschließend abfiltriert und mit einem flüssigen Alkan, bevorzugt mit Hexan oder Heptan, gewaschen.

In der dritten Stufe extrahiert man den aus der zweiten Stufe erhaltenen Feststoff einige Stunden lang bei Temperaturen zwischen 100 und 150°C mit überschüssigem Titantetrachlorid oder einer im Überschuß vorliegenden Lösung von Titantetrachlorid in einem inerten Lösungsmittel, vorzugsweise einem Alkylbenzol, wobei das Lösungsmittel wenigstens 5 Gew.-% Titantetrachlorid enthält. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente wird mit Cokatalysatoren als Ziegler-Natta-Katalysatorensystem verwendet. Als Cokatalysatoren kommen dabei Aluminiumverbindungen und Elektronendonorverbindungen in Betracht.

Geeignete Aluminiumverbindungen sind neben Trialkylaluminium auch solche Verbindungen, bei denen eine Alkylgruppe durch eine Alkoxygruppe oder durch ein Halogenatom, beispielsweise durch Chlor oder Brom, ersetzt ist.

Bevorzugt werden Trialkylaluminiumverbindungen verwendet, deren Alkylgruppen jeweils 1 bis 8 C-Atome aufweisen, beispielsweise Trimethyl-, Triethyl- oder Methyldiethylaluminium.

Bevorzugt verwendet man neben der Aluminiumverbindung noch als weiteren Cokatalysator Elektronendonorverbindungen wie beispielsweise mono- oder polyfunktionelle Carbonsäuren, Carbonsäureanhydride und Carbonsäureester, Ketone, Ether, Alkohole, Lactone, sowie phosphor- und siliciumorganische Verbindungen. Besonders geeignete Elektronendonorverbindungen sind dabei siliciumorganische Verbindungen der allgemeinen Formel (IV)

R⁷ ₙSi(OR⁸)₄₋ₙ (IV)

wobei R⁷ gleich oder verschieden ist und eine C₁- bis C₂₀-Alkylgruppe, eine 5- bis 7-gliedrige Cycloalkylgruppe, die ihrerseits eine C₁- bis C₁₀-Alkylgruppe tragen kann, oder eine C₆- bis C₂₀-Aryl- oder Arylalkylgruppe bedeutet, R⁸ gleich oder verschieden ist und eine C₁- bis C₂₀-Alkylgruppe bezeichnet und n für die Zahlen 1, 2 oder 3 steht. Besonders bevorzugt werden dabei solche Verbindungen, in denen R⁷ eine C₁- bis C₈-Alkylgruppe oder eine 5- bis 7-gliedrige Cycloalkylgruppe, R⁸ eine C₁- bis C₄-Alkylgruppe und n die Zahlen 1 oder 2 bedeuten.

Unter diesen Verbindungen sind Dimethoxydiisopropylsilan, Dimethoxyisobutylisopropylsilan, Dimethoxydiisobutylsilan, Dimethoxydicyclopentylsilan und Diethoxyisobutylisopropylsilan hervorzuheben.

Bevorzugt werden solche Katalysatorsysteme verwendet, bei denen das Atomverhältnis zwischen Aluminium aus der Aluminiumverbindung und Titan aus der titanhaltigen Feststoffkomponente 1:1 bis 800:1, insbesondere 2:1 bis 200:1, und das Molverhältnis zwischen der Aluminiumverbindung und der als Cokatalysator eingesetzten Elektronendonorverbindung 1:1 bis 100:1, insbesondere 2:1 bis 80:1 beträgt. Die Katalysatorbestandteile können in beliebiger Reihenfolge einzeln oder als Gemisch der Komponenten in das Polymerisationssystem eingebracht werden.

Mit Hilfe derartiger Katalysatorsysteme können die in den erfindungsgemäßen, gepfropften Propylencopolymerisaten enthaltenen Polymerisate a₁) hergestellt werden. Nach einem bevorzugten zweistufigen Verfahren wird dabei zunächst in einer ersten merisationsstufe das Propylencopolymerisat (I), und daran anschließend in einer zweiten Polymerisationsstufe das Propylencopolymerisat (II) hergestellt.

Die Copolymerisation des Propylens und der entsprechenden C₂-C₁₀-Alk-1-ene wird in der ersten Polymerisationsstufe üblicherweise bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind bei der Herstellung des Propylencopolymerisats (I) Drücke von 25 bis 35 bar, Temperaturen von 65 bis 85°C und mittlere Verweilzeiten von 1,5 bis 4 Stunden. Vorzugsweise wählt man dabei die Reaktionsbedingungen so, daß in dieser ersten Polymerisationsstufe pro mmol der Aluminiumkomponente 0,05 bis 2 kg des Propylencopolymerisats (I) gebildet werden. Als C₂-C₁₀-Alk-1-en wird dabei insbesondere Ethylen und But-1-en, oder ein Gemisch aus diesen Comonomeren verwendet. Zur Herstellung des Propylencopolymerisats (I) wird das Propylen mit den Comonomeren in der Weise copolymerisiert, daß das Verhältnis zwischen dem Partialdruck des Propylens und dem der Comonomeren auf 10:1 bis 1000:1, insbesondere auf 15:1 bis 500:1, eingestellt wird.

Das hierbei gebildete Propylencopolymerisat (I) wird nach Beendigung der Reaktion zusammen mit dem Katalysator aus der ersten Polymerisationsstufe ausgetragen und in die zweite Polymerisationsstufe eingeführt, wo das Propylencopolymerisat (II) hergestellt wird.

Dies erfolgt in der zweiten Polymerisationsstufe dadurch, daß in Anwesenheit des Propylencopolymerisats (I) Propylen zusammen mit einem oder mehreren C₂-C₁₀-Alk-1-enen bei Drücken von 5 bis 25 bar, Temperaturen von 30 bis 80°C und mittleren Verweilzeiten des Reaktionsgemisches von 1 bis 5 Stunden polymerisiert wird. Bevorzugt sind dabei Drücke von 10 bis 20 bar, Temperaturen von 40 bis 70°C und mittlere Verweilzeiten von 1,5 bis 4 Stunden. Üblicherweise liegen dabei die Drücke in der zweiten Polymerisationsstufe um wenigstens 7, vorzugsweise um wenigstens 10 bar unter denen in der ersten Polymerisationsstufe. Als C₂-C₁₀-Alk-1-ene werden dabei insbesondere Ethylen und But-1-en, oder ein Gemisch aus diesen Comonomeren eingesetzt. Zur Herstellung des Copolymerisats (II) wird das Propylen mit den Comonomeren in der Weise copolymerisiert, daß das Verhältnis zwischen dem Partialdruck des Propylens und dem der Comonomeren auf 0,1:1 bis 20:1, insbesondere auf 0,2:1 bis 15:1, eingestellt wird. Durch geeignete Wahl der Polymerisationsparameter sollte außerdem darauf geachtet werden, daß das Gewichtsverhältnis zwischen den in der ersten und den in der zweiten Polymerisationsstufe umgesetzten Monomeren im Bereich von 0,5:1 bis 20:1, insbesondere im Bereich von 0,6:1 bis 10:1, liegt.

Die Schmelzflußindizes der auf diese Weise erhältlichen Polymerisate a₁) liegen im Bereich von 0,1 bis 100, insbesondere im Bereich von 0,5 bis 50 g/10 min, bei 230°C und 2,16 kg, nach DIN 53 735. Der Schmelzflußindex entspricht dabei derjenigen Menge an Polymerisat, die bei 230°C und einem Gewicht von 2,16 kg aus der nach DIN 53 735 genormten Prüfvorrichtung ausgetragen wird.

Weiterhin können die erfindungsgemäßen gepfropften Propylenpolymerisate ein Polymerisat a₂) aus 25 bis 97 Gew.-% eines Propylencopolymerisats und 3 bis 75 Gew.-% eines Propylencopolymerisats mit einpolymerisierten C₂-C₁₀-Alk-1-enen enthalten, wobei der Comonomerengehalt 15 bis 80 Gew.-%, bezogen auf die letztere Komponente beträgt. Bevorzugt sind dabei gepfropfte Propylenpolymerisate, deren Polymerisat a₂) aus 35 bis 95 Gew.-% eines Propylenhomopolymerisats und 5 bis 65 Gew.-% eines Propylencopolymerisats besteht, wobei der Comonomerengehalt 20 bis 75 Gew.-%, bezogen auf die letztere Komponente beträgt. Besonders bevorzugte gepfropfte Propylenpolymerisate enthalten ein Polymerisat a₂) aus 40 bis 93 Gew.-% eines Propylenhomopolymerisats und 7 bis 60 Gew.-% eines Propylencopolymerisats. In diesem Fall liegt der Comonomerengehalt bei 20 bis 70 Gew.-%, bezogen auf die letztere Komponente. Unter einpolymerisierten C₂-C₁₀-Alk-1- enen sind in diesem Zusammenhang insbesondere Ethylen, But-1-en, Pent-1-en, Hex-1-en, Hept-1-en oder Oct-1-en oder Gemische aus diesen Comonomeren zu verstehen, wobei bevorzugt Ethylen oder But-1-en eingesetzt werden.

Die Herstellung des erfindungsgemäß zu verwendenden Polymerisats a₂) kann in den üblichen, für die Polymerisation von Propylen verwendeten Reaktoren entweder absatzweise oder bevorzugt kontinuierlich durchgeführt werden.

Was die dabei eingesetzten Reaktoren und Reaktionsbedingungen sowie die dabei verwendeten Ziegler-Natta-Katalysatoren betrifft, so verweisen wir auf die in dieser Hinsicht analoge Herstellung der Polymerisate a₁).

In einem bevorzugten Herstellungsverfahren der Polymerisate a₂) wird dabei in einer ersten Polymerisationsstufe Propylen polymerisiert und dem daraus erhältlichen Propylenhomopolymerisat in einer zweiten Polymerisationsstufe ein Gemisch aus Propylen und einem oder mehreren C₂-C₁₀-Alk-1-enen hinzupolymerisiert.

Die Polymerisation des Propylens wird in der ersten Polymerisationsstufe bei einem Druck von 20 bis 40 bar, einer Temperatur von 60 bis 90°C und einer mittleren Verweilzeit des Reaktionsgemisches von 1 bis 5 Stunden durchgeführt. Bevorzugt sind dabei Drücke von 20 bis 35 bar, Temperaturen von 65 bis 85°C und mittlere Verweilzeiten von 1,5 bis 4 Stunden. Man wählt die tionsbedingungen vorzugsweise so, daß in der ersten Polymerisationsstufe pro mmol der Aluminiumkomponente 0,05 bis 2 kg, bevorzugt 0,1 bis 1,5 kg, Propylenhomopolymerisat gebildet werden. Zur Molmassenregelung können die bei der Polymerisation von Alk-1-enen üblichen Regler, beispielsweise Wasserstoff mitverwendet werden.

Dieses Propylenhomopolymerisat wird nach Beendigung der Reaktion mit dem Katalysator aus der ersten Polymerisationsstufe ausgetragen und in die zweiten Polymerisationsstufe eingeführt, wo diesem ein Gemisch von Propylen und einem oder mehreren C₂-C₁₀-Alk-1-enen hinzupolymerisiert wird. Der in der zweiten Polymerisationsstufe vorherrschende Druck liegt 7, bevorzugt 10 bar, unter dem der ersten Polymerisationsstufe und beträgt 5 bis 30, vorzugsweise 10 bis 25 bar. Die Temperatur liegt bei 30 bis 100, bevorzugt bei 35 bis 80°C und die mittlere Verweilzeit des Polymerisats beträgt 1 bis 5 Stunden, bevorzugt 1,5 bis 4 Stunden. In dieser zweiten Polymerisationsstufe wird das Verhältnis der Partialdrücke zwischen Propylen und den einpolymerisierten C₂-C₁₀-Alk-1- enen auf 0,1:1 bis 10:1 eingestellt. Durch geeignete Wahl der Reaktionsparameter sollte ferner darauf geachtet werden, daß das Gewichtsverhältnis zwischen den in der ersten und den in der zweiten Polymerisationsstufe umgesetzten Monomeren 0,2:1 bis 20:1, insbesondere 0,4:1 bis 15:1, beträgt.

Die Schmelzflußindizes der auf diese Weise erhältlichen Polymerisate a₂) liegen im Bereich von 0,1 bis 100, insbesondere im Bereich von 0,5 bis 50g/10 min., bei 230°C und 2,16 kg nach DIN 53735.

Weiterhin enthalten die erfindungsgemäßen, gepfropften Propylencopolymerisate eine Monomaleimidverbindung b) der folgenden Formel (I) 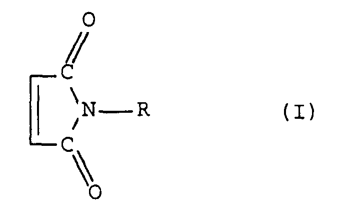 in der R die folgende Bedeutung hat:
C₁-C₁₀-Alkyl, wobei der Alkylrest mit einem oder mehreren Sauerstoffatomen unterbrochen sein kann, C₅-C₁₀-Cycloalkyl, C₆-C₁₂-Aryl, C₇-C₁₈-Aralkyl, sowie einen Rest der folgenden Formel (II)

R¹-X (II)

wobei R¹ für einen C₁-C₁₀-Alkylrest und X für eine der folgenden funktionellen Gruppen steht:
-COOH, -COOR², OH, OR³, NH₂, NHR⁴, NR⁵R⁶,
und wobei die Reste R², R³, R⁴, R⁵ und R⁶ jeweils eine C₁-C₁₀-Alkylgruppe bedeuten.

Bevorzugt sind dabei solche Monomaleimidverbindungen der folgenden Formel (I), bei denen R die folgende Bedeutung hat:
C₁-C₈-Alkyl, C₅-C₇-Cycloalkyl, C₆-C₁₀-Alkyl, C₇-C₁₂-Aralkyl, sowie einen Rest der Formel (II), wobei R¹ für einen C₁-C₁₀-Alkylrest und X für eine der folgenden funktionellen Gruppen steht:
-COOH, -COOR², OH, OR³, NH₂, NHR⁴, NR⁵R⁶, und wobei die Reste R², R³, R⁴, R⁵ und R⁶ eine C₁-C₁₀-Alkylgruppe bedeuten.

Unter diesen Monomaleimidverbindungen b) sind insbesondere 4-Maleinimidobenzoesäure, N,N'-Dimethylamino-4-maleinimido-benzol oder p-Hydroxyphenylmaleinimid hervorzuheben.

Die Monomaleimidverbindungen b), können beispielsweise dadurch hergestellt werden, daß Maleinsäureanhydrid mit den entsprechenden Monoaminen und anschließend mit Essigsäure und Natriumacetat umgesetzt wird. Derartige Herstellungsverfahren sind dem Fachmann bekannt.

Die erfindungsgemäßen, gepfropften Propylencopolymerisate sind erhältlich durch Umsetzung des Polymerisats a₁) oder a₂) mit der Monomaleimidverbindung b) bei Temperaturen von 180 bis 280°C, Drücken von 1 bis 100 bar und mittleren Verweilzeiten des Reaktionsgemisches von 0,2 bis 10 Minuten. Bevorzugt sind dabei Temperaturen von 190 bis 260°C, Drücke von 1 bis 50 bar und mittlere Verweilzeiten von 0,2 bis 5 Minuten. Die Pfropfung der Propylencopolymerisate erfolgt in den in der Kunststoffverarbeitung üblicherweise zur Vereinigung von Stoffen eingesetzten Apparaturen, beispielsweise in Trommelmischern, in Mühlen, in Schnecken- oder Scheibenextrudern, in Walzwerken oder Knetern.

Zur Herstellung der erfindungsgemäßen, gepfropften Propylencopolymerisate werden vorteilhaft pro 100 Gew.-Teile des Polymerisats a₁) oder a₂) 0,001 bis 5 Gew.-Teile der Monomaleimidverbindung b) verwendet. Vorzugsweise werden pro 100 Gew.-Teile des Polymerisats a₁) oder a₂) 0,01 bis 2 Gew.-Teile und insbesondere 0,05 bis 1,0 Gew.-Teile der Monomaleimidverbindung b) eingesetzt. Die Monomaleimidverbindung b) wird dabei dem Polymerisat a₁) oder a₂) aufgepfropft.

In einem besonders bevorzugten Herstellungsverfahren werden dem Polymerisat a₁) oder a₂) unmittelbar nach dessen Herstellung entsprechende Mengen der Monomaleimidverbindung b) in einer, an den Herstellungsreaktor angeschlossenen Mischapparatur hinzugefügt. Vorzugsweise wird dabei als Mischapparatur ein Extruder verwendet. Nach Beendigung der Umsetzung wird das gepfropfte Propylencopolymerisat aus der Mischapparatur ausgetragen und in einem daran angeschossenen Schachttrockner von flüchtigen Ausgangsprodukten getrennt. Das auf diese Weise erhaltene gepfropfte Propylencopolymerisat ist direkt weiterverarbeitbar.

Durch die Wahl der speziellen Polymerisate a₁) oder a₂) und der Monomaleimidverbindungen b) erhält man gepfropfte Propylencopolymerisate mit guten mechanischen Eigenschaften, insbesondere einer guten Haftung auf polaren Substanzen wie Glas oder Metalle. Die erfindungsgemäßen gepfropften Propylencopolymerisate sind leicht verarbeitbar und enthalten praktisch keine flüchtigen Substanzen mehr.

Vorteilhaft an dem zu ihrer Herstellung verwendeten Verfahren ist insbesondere, daß die Pfropfung in Abwesenheit eines radikalisch zerfallenden Initiators erfolgen kann. Das ebenfalls erfindungsgemäße Verfahren zur Herstellung der gepfropften Propylencopolymerisate zeichnet sich insbesondere auch durch eine hohe Pfropfausbeute bereits bei relativ niedrigen Konzentration des zu pfropfenden Comonomeren aus.

Die erfindungsgemäßen gepfropften Propylencopolymerisate eignen sich insbesondere zur Herstellung von Folien, Fasern und Formkörpern.

### Beispiele

### Beispiel 1

100 Gew.-Teile eines Polymerisats a₁) aus 54,3 Gew.-% eines Propylen-Ethylen-Copolymerisats (I) mit 2,5 Gew.-% einpolymerisiertem Ethylen und 45,7 Gew.-% eines Propylen-Ethylen-Copolymerisats (II) mit 60 Gew.-% einpolymerisiertem Ethylen und einem Schmelzflußindex von 1,0 g/10min., bei 230°C und 2,16 kg, nach DIN 53735 wurden im Zweiwellenextruder "ZSK 40" mit 4-Maleinimidobenzoesäure zur Reaktion gebracht. Die jeweiligen Anteile der Copolymerisate (I) und (II) wurden durch Extraktionsfraktionierung nach W. Holtrup, Makromolekulare Chemie, 178, 2335 [1977], die Ethylengehalte durch Fouriertransformationsspektroskopie ermittelt.

Die Umsetzung wurde bei einer Temperatur von 240°C, einem Druck von 0,1 bar und einer durchschnittlichen Verweilzeit von 2 Minuten durchgeführt. Die jeweiligen Mengen der verwendeten 4-Maleinimidobenzoesäure sind in der nachfolgenden Tabelle aufgeführt.

Die dabei erhaltenen gepfropften Propylenpolymerisate sind farb- und geruchlos und weisen gegenüber dem eingesetzten Polymerisat a₁) nahezu unveränderte Fließfähigkeiten auf. Die gepfropften Propylenpolymerisate wurden anschließend aus einem Gemisch von Ethylbenzol und Methanol umgefällt. Die Pfropfausbeute wurde im Falle saurer Gruppen enthaltender Pfropfcopolymerisate durch Titration mit Kalilauge in Xylol bestimmt, ansonsten durch rotspektroskopie.

**Tabelle 1**

| Menge der eingesetzten 4-Maleinimidobenzoesäure [Gew.-Teile] | Pfropfausbeute [%] | Schmelzflußindex * [g/10min] |
|---|---|---|
| | | |
| 0 | - | 1,3 |
| 0,2 | 98 | 1,2 |
| 0,4 | 90 | 1,2 |
| 0,6 | 85 | 1,3 |
| 1,0 | 70 | 1,2 |

| | | |
|---|---|---|
| * bei 230°C und 2,16 kg, nach DIN 53735 | | |

### Vergleichsbeispiel A

100 Gew.-Teile des im Beispiel 1 eingesetzten Polymerisats a₁) wurden unter analogen Bedingungen gepfropft, wobei anstelle von 4-Maleinimidobenzoesäure die entsprechende Menge Maleinsäureanhydrid verwendet wurde. Die gepfropften Propylenpolymerisate wurden analog dem Beispiel 1 aufgearbeitet und vermessen.

**Tabelle 2**

| Menge des eingesetzten Maleinsäureanhydrids [Gew.-Teile] | Pfropfausbeute [%] | Schmelzflußindex * [g/10min] |
|---|---|---|
| | | |
| 0 | - | 2,5 |
| 0,2 | 72 | 3,0 |
| 0,4 | 55 | 3,8 |
| 0,6 | 38 | 4,1 |
| 1,0 | 22 | 4,6 |

| | | |
|---|---|---|
| * bei 230°C und 2,16 kg, nach DIN 53735 | | |

Die gepfropften Propylenpolymerisate des Vergleichsbeispiels A waren nicht vollständig frei von flüchtigen Substanzen.

Aus einem Vergleich zwischen dem erfindungsgemäßen Beispiel 1 und dem Vergleichsbeispiel A wird deutlich, daß durch Verwendung der Monomaleimidverbindungen als Pfropfcomonomere höhere Pfropfausbeuten erzielt werden können als mit anderen Pfropfcomonomeren.

### Beispiel 2

100 Gew.-Teile eines Polymerisats a₂) aus 62,5 Gew.-% eines Propylenhomopolymerisats und 37,5 Gew.-% eines Propylencopolymerisats mit 24,9 Gew.-% einpolymerisiertem Ethylen und einem Schmelzflußindex von 2,3 g/10 min, bei 230°C und 2,16 kg , nach DIN 53 735 wurde im Zweischneckenextruder "ZSK 40" der Firma Werner & Pfleiderer mit 4-Maleinimidobenzoesäure zur Reaktion gebracht. Die Umsetzung wurde bei einer Temperatur von 240°C , einem Druck von 0,1 bar und einer durchschnittlichen Verweilzeit von 2 Minuten durchgeführt. Die jeweiligen Mengen der verwendeten 4-Maleinimidobenzoesäure sind in der nachfolgenden Tabelle 3 aufgeführt.

Die dabei erhaltenen gepfropften Propylenpolymerisate sind farb- und geruchlos und weisen gegenüber dem eingesetzten Polymerisat a₂) nahezu unveränderte Fließfähigkeiten auf. Die gepfropften Propylenpolymerisate wurden anschließend aus einem Gemisch von Ethylbenzol und Methanol umgefällt. Die Pfropfausbeute wurde im Falle saurer Gruppen enthaltender Pfropfcopolymerisate durch Titration mit Kalilauge in Xylol bestimmt, ansonsten durch rotspektroskopie.

**Tabelle 3**

| Menge der eingesetzten 4-Maleinimdobenzoesäure [Gew.-Teile] | Pfropfausbeute [%] | Schmelzflußindex* [g/10 min] |
|---|---|---|
| 0 | - | 2,5 |
| 0,2 | 96 | 3,0 |
| 0,4 | 88 | 3,6 |
| 0,6 | 78 | 4,1 |
| 1,0 | 65 | 4,0 |

| | | |
|---|---|---|
| *) bei 230°C und 2,16 kg, nach DIN 53 735 | | |

### Beispiel 3

100 Gew.-Teile des im Beispiel 2 verwendeten Polymerisats a₂) wurden unter den gleichen Bedingungen mit einer Maleimidverbindung umgesetzt, wobei anstelle von 4-Maleinimidobenzoesäure die entsprechende Menge N,N'-Dimethylamino-4-maleinimidobenzol verwendet wurde.

Die dabei erhaltenen gepfropften Propylenpolymerisate sind farb- und geruchlos und weisen gegenüber dem eingesetzten Poylmerisat a₂) nahezu unveränderte Fließfähigkeiten auf. Die gepfropften Propylenpolymerisate werden analog dem Beispiel 2 aufgearbeitet und vermessen.

**Tabelle 4**

| Menge des eingesetzten Monomaleinimids [Gew.-Teile] | Pfropfausbeute [%] | Schmelzflußindex* [g/10 min] |
|---|---|---|
| 0 | - | 2,5 |
| 0,2 | 95 | 3,1 |
| 0,4 | 80 | 3,2 |
| 0,6 | 71 | 3,5 |
| 1,0 | 60 | 4,1 |

| | | |
|---|---|---|
| *) bei 230°C und 2,16 kg, nach DIN 53 735 | | |

### Vergleichsbeispiel B

100 Gew.-Teile des im Beispiel 2 eingesetzten Polymerisats a₂) wurden unter analogen Bedingungen gepfropft, wobei anstelle von 4-Maleinimidobenzoesäure die entsprechende Menge Maleinsäureanhydrid verwendet wurde. Die gepfropften Propylenpolymerisate wurden analog dem Beispiel 2 aufgearbeitet und vermessen.

**Tabelle 5**

| Menge des eingesetzten Maleinsäureanhydrids [Gew.-Teile] | Pfropfausbeute [%] | Schmelzflußindex* [g/10 min] |
|---|---|---|
| 0 | - | 2,5 |
| 0,2 | 75 | 3,0 |
| 0,4 | 50 | 3,8 |
| 0,6 | 36 | 4,1 |
| 1,0 | 22 | 4,6 |

| | | |
|---|---|---|
| *) bei 230°C und 2,16 kg, nach DIN 53 735 | | |

Die gepfropften Propylenpolymerisate des Vergleichsbeispiels B waren nicht vollständig frei von flüchtigen Substanzen.

### Vergleichsbeispiel C

100 Gew.-Teile des im Beispiel 2 eingesetzten Polymerisats a₂) wurden unter analogen Bedingungen gepfropft, wobei als Pfropfcomonomeres jetzt Maleinsäure-n-butylester verwendet wurde. Die gepfropften Propylenpolymerisate wurden analog dem Beispiel 2 aufgearbeitet und vermessen.

**Tabelle 6**

| Menge des eingesetzten Maleinsäure-n-butylesters [Gew.-Teile] | Pfropfausbeute [%] | Schmelzflußindex* [g/10 min] |
|---|---|---|
| 0 | - | 2,5 |
| 0,2 | 30 | 2,6 |
| 0,4 | 22 | 2,8 |
| 0,6 | 15 | 3,6 |
| 1,0 | 10 | 3,5 |

| | | |
|---|---|---|
| *) bei 230°C und 2,16 kg, nach DIN 53 735 | | |

Die gepfropften Propylenpolymerisate des Vergleichsbeispiels C waren nicht vollständig frei von flüchtigen Substanzen.

Aus einem Vergleich zwischen den erfindungsgemäßen Beispielen 2 und 3 und den Vergleichsbeispielen B und C wird deutlich, daß durch Verwendung der Monomaleimidverbindungen als Pfropfcomonomeres höhere Pfropfausbeuten erzielt werden können als mit anderen Pfropfcomonomeren.

## Patentansprüche

1. Gepfropfte Propylencopolymerisate mit einem Schmelzflußindex von 0,1 bis 100 g/10 min., bei 230°C und unter einem Gewicht von 2,16 kg, aus
a₁) einem Polymerisat aus 25 bis 97 Gew.-% eines Propylencopolymerisats (I), das 0,1 bis 15 Gew.-% an einpolymerisierten C₂-C₁₀-Alk-1-enen enthält und aus 3 bis 75 Gew.-% eines weiteren Propylencopolymerisats (II), das 15 bis 80 Gew.-% einpolymerisierte C₂-C₁₀-Alk-1-ene aufweist oder aus
a₂) einem Polymerisat aus 25 bis 97 Gew.-% eines Propylenhomopolymerisats und 3 bis 75 Gew.-% eines Propylencopolymerisats mit einpolymerisierten C₂-C₁₀-Alk-1-enen, wobei der Comonomerengehalt 15 bis 80 Gew.-%, bezogen auf die letztere Komponente beträgt und
b) einer Monomaleimidverbindung der folgenden Formel (I) 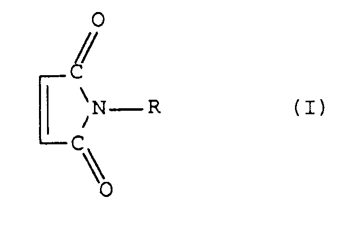 in der R die folgende Bedeutung hat:
C₁-C₁₀-Alkyl, wobei der Alkylrest mit einem oder mehreren Sauerstoffatomen unterbrochen sein kann, C₅-C₁₀-Cycloalkyl, C₆-C₁₂-Aryl, C₇-C₁₈-Aralkyl, sowie einen Rest der folgenden Formel (II)
R¹-X (II)
wobei R¹ einen C₁-C₁₀-Alkylrest und X für eine der folgenden funktionellen Gruppen steht:
-COOH, -COOR², OH, OR³, NH₂, NHR⁴, NR⁵R⁶, und wobei die Reste R², R³, R⁴, R⁵ und R⁶ jeweils eine C₁-C₁₀-Alkylgruppe bedeuten,
erhältlich durch Umsetzung des Polymerisats a₁) oder a₂) mit der Monomaleimidverbindung b) bei Temperaturen von 180 bis 280°C, Drücken von 1 bis 100 bar und mittleren Verweilzeiten des Reaktionsgemisches von 0,2 bis 10 Minuten.

2. Gepfropfte Propylencopolymerisate nach Anspruch 1, wobei das Polymerisat a₁) verwendet wird.

3. Gepropfte Propylencopolymerisate nach Anspruch 1, wobei das Polymerisat a₂) verwendet wird.

4. Gepfropfte Propylencopolymerisate nach Anspruch 2, wobei das Polymerisat a₁) aus 35 bis 95 Gew.-% eines Propylencopolymerisats (I) mit 0,2 bis 12 Gew.-% einpolymerisierter C₂-C₁₀-Alk-1-ene und aus 5 bis 65 Gew.-% eines Propylencopolymerisats (II) mit 20 bis 75 Gew.-% einpolymerisierter C₂-C₁₀-Alk-1-ene besteht.

5. Gepfropfte Propylenpolymerisate nach Anspruch 3, wobei das Polymerisat a₂) aus 35 bis 95 Gew.-% eines Propylenhomopolymerisats und 5 bis 65 Gew.-% eines Propylencopolymerisats besteht und der Comonomerengehalt 20 bis 75 Gew.-% bezogen auf die letztere Komponente beträgt.

6. Gepfropfte Propylencopolymerisate nach den Ansprüchen 1 bis 5, wobei man pro 100 Gew.-Teile des Polymerisats a₁) oder a₂) 0,001 bis 5 Gew.-Teile der Monomaleimidverbindung b) verwendet.

7. Gepfropfte Propylencopolymerisate nach den Ansprüchen 1 bis 6, wobei als Monomaleimidverbindungen b) Verbindungen der Formel (I) verwendet werden, in der R die folgende Bedeutung hat:
C₁-C₈-Alkyl, C₅-C₇-Cycloalkyl, C₆-C₁₀-Aryl, C₇-C₁₂-Aralkyl, sowie einen Rest der Formel (II), wobei R¹ für einen C₁-C₁₀-Alkylrest und X für eine der folgenden funktionellen Gruppen steht:
-COOH, -COOR², OH, OR³, NH₂, NHR⁴, NR⁵R⁶, und wobei die Reste R², R³, R⁴, R⁵ und R⁶ jeweils eine C₁-C₁₀-Alkylgruppe bedeuten.

8. Gepfropfte Propylencopolymerisate nach den Ansprüchen 1 bis 7, wobei als Monomaleimidverbindung b) 4-Maleinimidobenzoesäure, N,N'-Dimethylamino-4-maleinimidobenzol oder p-Hydroxyphenylmaleinimid verwendet wird.

9. Verfahren zur Herstellung von gepfropften Propylencopolymerisaten gemäß den Ansprüchen 1 bis 8, dadurch gekennzeichnet, daß man die Umsetzung des Polymerisats a₁) oder a₂) mit der Monomaleimidverbindung b) bei Temperaturen von 190 bis 260°C, Drücken von 1 bis 50 bar und mittleren Verweilzeiten von 0,2 bis 5 Minuten durchführt.

10. Verfahren zur Herstellung von gepfropften Propylencopolymerisaten nach Anspruch 9, dadurch gekennzeichnet, daß man die Monomaleimidverbindung b) mit dem Polymerisat a₁) oder a₂) unmittelbar nach dessen Herstellung in einer, an den Herstellungsreaktor angeschlossenen Mischapparatur umsetzt.

11. Folien, Fasern und Formkörper aus den gepfropften Propylenpolymerisaten gemäß den Ansprüchen 1 bis 8.

## Claims

1. A grafted propylene copolymer having a melt flow index of from 0.1 to 100 g/10 min, at 230°C and under a weight of 2.16 kg, comprising
a₁) a polymer comprising from 25 to 97% by weight of a propylene copolymer (I), which contains from 0.1 to 15% by weight of copolymerized C₂-₁₀-alk-1-enes, and from 3 to 75% by weight of a further propylene copolymer (II) which contains from 15 to 80% by weight of copolymerized C₂-C₁₀-alk-1-enes, or comprising
a₂) a polymer comprising from 25 to 97% by weight of a propylene homopolymer and from 3 to 75% by weight of a propylene copolymer containing copolymerized C₂-C₁₀-alk-1-enes, the comonomer content being from 15 to 80% by weight, based on the latter component, and
b) a monomaleimide compound of the following formula (I) 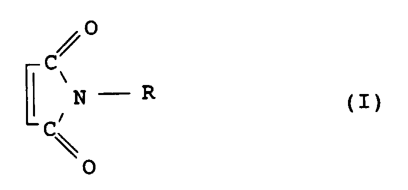 where R has the following meanings:
C₁-C₁₀-alkyl, it being possible for the alkyl radical to be interrupted by one or more oxygen atoms,
C₅-C₁₀-cycloalkyl, C₆-C₁₂-aryl, C₇-C₁₈-aralkyl, and a radical of the following formula (II)
R¹-X (II)
where R¹ is a C₁-C₁₀-alkyl radical and X is one of the following functional groups:
-COOH, -COOR², OH, OR³, NH₂, NHR⁴, NR⁵R⁶, and where the radicals R², R³, R⁴, R⁵ and R⁶ in each case are C₁-C₁₀-alkyl groups,
obtainable by reacting the polymer a₁) or a₂) with the monomaleimide compound b) at from 180 to 280°C and from 1 to 100 bar and with average residence times of the reaction mixture of from 0.2 to 10 minutes.

2. A grafted propylene copolymer as claimed in claim 1, the polymer a₁) being used.

3. A grafted propylene copolymer as claimed in claim 1, the polymer a₂) being used.

4. A grafted propylene copolymer as claimed in claim 2, the polymer a₁) comprising from 35 to 95% by weight of a propylene copolymer (I), containing from 0.2 to 12% by weight of copolymerized C₂-C₁₀-alk-1-enes, and from 5 to 65% by weight of a propylene copolymer (II) containing from 20 to 75% by weight of copolymerized C₂-C₁₀-alk-1-enes.

5. A grafted propylene polymer as claimed in claim 3, the polymer a₂) comprising from 35 to 95% by weight of a propylene homo-polymer and from 5 to 65% by weight of a propylene copolymer and the comonomer content being from 20 to 75% by weight, based on the latter component.

6. A grafted propylene copolymer as claimed in claims 1 to 5, from 0.001 to 5 parts by weight of the monomaleimide compound b) being used per 100 parts by weight of the polymer a₁) or a₂).

7. A grafted propylene copolymer as claimed in claims 1 to 6, the monomaleimide compounds b) used being compounds of the formula (I) where R has the following meanings:
C₁-C₈-alkyl, C₅-C₇-cycloalkyl, C₆-C₁₀-aryl, C₇-C₁₂-aralkyl, and a radical of the formula (II), R¹ being a C₁-C₁₀-alkyl radical and X being one of the following functional groups:
-COOH, -COOR², OH, OR³, NH₂, NHR⁴, NR⁵R⁶, and the radicals R², R³, R⁴, R⁵ and R⁶ in each case being C₁-C₁₀-alkyl groups.

8. A grafted propylene copolymer as claimed in claims 1 to 7, the monomaleimide compound b) used being 4-maleimidobenzoic acid, N,N'-dimethylamino-4-maleimidobenzene or p-hydroxyphenylmaleimide.

9. A process for preparing grafted propylene copolymers as claimed in claims 1 to 8, which comprises carrying out the reaction of the polymer a₁) or a₂) with the monomaleimide compound b) at from 190 to 260°C and from 1 to 50 bar and with average residence times of from 0.2 to 5 minutes.

10. A process for preparing grafted propylene copolymers as claimed in claim 9, wherein the monomaleimide compound b) is reacted with the polymer a₁) or a₂) immediately after its preparation in a mixing apparatus attached to the preparation reactor.

11. A film, fiber or molded article made from the grafted propylene polymers as claimed in claims 1 to 8.

## Revendications

1. Copolymères greffés du propylène ayant un indice de fluidité à l'état fondu de 0,1 à 100 g/10 minutes, à 230° C sous un poids de 2,16 kg, qui consistent en
**a**_{**1**}**)** un polymère consistant lui-même en 25 à 97 % en poids d'un copolymère du propylène I qui contient 0,1 à 15 % en poids d'alcènes-1 en C2-C10 à l'état polymérisé et 3 à 75 % en poids d'un autre copolymère du propylène II qui contient 15 à 80 % en poids d'alcènes-1 en C2-C10 à l'état polymérisé,
ou bien en
**a**_{**2**}**)** un polymère consistant lui-même en 25 à 97 % en poids d'un homopolymère du propylène et 3 à 75 % en poids d'un copolymère du propylène contenant des alcènes-1 en C2-C10 à l'état polymérisé, la teneur en comonomères étant de 15 à 80 % du poids de ce dernier composant et
**b)** un monomaléimide de formule I 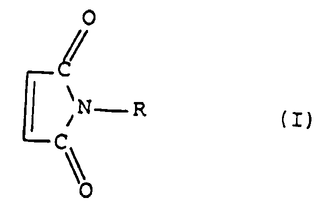 dans laquelle R a les significations suivantes :
un groupe alkyle en C1-C10 qui peut être interrompu par un ou plusieurs atomes d'oxygène, un groupe cycloalkyle en C5-C10, aryle en C6-C12, aralkyle en C7-C18 ou un groupe de formule II
R¹-X (II)
dans laquelle R¹ représente un groupe alkyle en C1-C10 et X représente l'un des groupes fonctionnels suivants :
-COOH, -COOR², OH, OR³, NH₂, NHR⁴, NR⁵R⁶, les symboles R², R³, R⁴, R⁵ et R⁶ représentant chacun un groupe alkyle en C1-C10,
qu'on obtient en faisant réagir le polymère a₁) ou le polymère a₂) avec le monomaléimide b) à des températures de 180 à 280° C, des pressions de 1 à 100 bar et des durées de réaction moyennes de 0,2 à 10 minutes.

2. Copolymères greffés du propylène selon la revendication 1, pour lesquels on a utilisé le polymère a₁).

3. Copolymères greffés du propylène selon la revendication 1, pour lesquels on a utilisé le polymère a₂).

4. Copolymères greffés du propylène selon la revendication 2, pour lesquels le polymère a₁) consiste en 35 à 95 % en poids d'un copolymère du propylène I contenant 0,2 à 12 % en poids d'alcènes-1 en C2-C10 à l'état polymérisé, et 5 à 65 % en poids d'un copolymère du propylène II contenant 20 à 75 % en poids d'alcènes-1 en C2-C10 à l'état polymérisé.

5. Copolymères greffés du propylène selon la revendication 3, pour lesquels le polymère a₂) consiste en 35 à 95 % en poids d'un homopolymère du propylène et 5 à 65 % en poids d'un copolymère du propylène, la teneur en comonomères étant de 20 à 75 % en poids pour ce dernier composant.

6. Copolymères greffés du propylène selon les revendications 1 à 5, pour lesquels on utilise de 0,001 à 5 parties en poids du monomaléimide b) pour 100 parties en poids du polymère a₁) ou a₂).

7. Copolymères greffés du propylène selon les revendications 1 à 6, pour lesquels on utilise en tant que monomaléimides b) des composés de formule I dans laquelle R a les significations suivantes :
alkyle en C1-C8, cycloalkyle en C5-C7, aryle en C6-C10, aralkyle en C7-C12, ou un groupe de formule II dans laquelle E¹ représente un groupe alkyle en C1-C10, et X représente l'un des groupes fonctionnels suivants :
-COOH, -COOR², OH, OR³, NH₂, NHR⁴, NR⁵R⁶, les symboles R², R³, R⁴, R⁵ et R⁶ représentant chacun un groupe alkyle en C1-C10,

8. Copolymères greffés du propylène selon les revendications 1 à 7, pour lesquels on utilise en tant que monomaléimide b), l'acide 4-maléimidobenzoïque, le N,N'-diméthylamino-4-maléimidobenzène ou le p-hydroxyphénylmaléimide.

9. Procédé de préparation des copolymères greffés selon les revendications 1 à 8, caractérisé par le fait que l'on fait réagir le polymère a₁) ou a₂) avec le monomaléimide b) à des températures de 190 à 260° C sous des pressions de 1 à 50 bar, avec des durées de réaction moyennes de 0,2 à 5 minutes.

10. Procédé de préparation des copolymères greffés selon la revendication 9, caractérisé par le fait que l'on fait réagir le monomaléimide b) avec le polymère a₁) ou a₂) immédiatement après sa préparation, dans un appareil de mélange placé à la suite du réacteur de préparation.

11. Feuilles, fibres et objets moulés consistant en les polymères greffés du propylène selon les revendications 1 à 8.
